(19) **Europäisches Patentamt / European Patent Office / Office européen des brevets**

(11) **EP 2 624 404 A1**

(12) **EUROPEAN PATENT APPLICATION**
published in accordance with Art. 153(4) EPC

(43) Date of publication:
**07.08.2013 Bulletin 2013/32**

(21) Application number: **11829081.6**

(22) Date of filing: **27.09.2011**

(51) Int Cl.:
***H02J 3/38*** (2006.01)

(86) International application number:
**PCT/JP2011/071993**

(87) International publication number:
**WO 2012/043528 (05.04.2012 Gazette 2012/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2010 JP 2010217885**

(71) Applicant: **Sanyo Electric Co., Ltd.**
**Osaka 570-8677 (JP)**

(72) Inventors:
• **ITOH Kazuo**
**Moriguchi City**
**Osaka 570-8677 (JP)**

• **MAKINO Masahiro**
**Moriguchi City**
**Osaka 570-8677 (JP)**
• **HORIO Wataru**
**Moriguchi City**
**Osaka 570-8677 (JP)**

(74) Representative: **Glawe, Delfs, Moll**
**Patent- und Rechtsanwälte**
**Postfach 26 01 62**
**80058 München (DE)**

(54) **SYSTEM CONNECTION DEVICE AND SYSTEM CONNECTION SYSTEM**

(57) A grid connecting device is provided which connects to an electric power system, and outputs power generated by a connected distributed power source to the electrical grid. In this grid connecting device, it is determined whether the rate of decline in the level of sunlight exceeds a predetermined threshold value, and a predetermined voltage sag response operation is performed based on the results of the determination.

Fig. 5

EP 2 624 404 A1

## Description

## FIELD OF THE INVENTION

The present invention relates to a grid connecting device for outputting electric power obtained from a dispersed power source to the connected electrical grid (power distribution system) and to a grid connecting system including a plurality of grid connecting devices.

## BACKGROUND OF THE INVENTION

A inverter (grid connecting device) is often used which connects to an alternating-current electrical grid and outputs power generated by a dispersed power source (such as photovoltaic cells for household use) to the electrical grid.

A inverter has functions for connecting to the electrical grid, converting the direct-current electric power generated by the dispersed power source to alternating-current electric power, and outputting the alternating-current electric power to the electrical grid. Usually, the waveform, etc. of the voltage outputted from the inverter to the electrical grid is adjusted in order to match that of the electrical grid and not disrupt the power state of the electrical grid.

When a inverter is used, it is necessary to pay attention to the stand-alone operating state (the independent operating state of the dispersed power source). The dispersed power source continues to supply power in the stand-alone power state when the electrical grid is experiencing a power failure. From the standpoint of safety, the stand-alone operating state should be avoided as much as possible. Also, the inverter requires a means of disconnecting from the electrical grid when the dispersed power source is operating in the stand-alone operating state.

Therefore, a power condition is equipped with a means for detecting the stand-alone operating state (a means for determining whether or not the dispersed power source is operating in the stand-alone operating state), and disconnecting from the power source when the stand-alone operating state occurs. Means for detecting the stand-alone operating state generally include those using a passive detection method (detecting electrical fluctuations in the electrical grid caused by stand-alone operation) and those using an active detection method (causing an active change in the electrical grid and detecting what happens to the power state as a result of this change).

A method (trigger method) has been investigated as one technique for detecting stand-alone operation in which the electrical grid is monitored for the occurrence of electrical fluctuations exceeding a reference level and, when such an electrical fluctuation occurs (that is, when stand-alone operation is suspected), it is determined whether or not stand-alone operation has occurred. The trigger method is an active detection method in that stand-alone operation is detected by using the occurrence of electrical fluctuations exceeding a reference level as the trigger (for beginning the process of detecting whether stand-alone operation is occurring).

The trigger method has its advantages as an active detection method because of high detection precision, and because active fluctuations (small changes in frequency, etc.) are simply applied to the electrical grid when there is a suspicion of stand-alone operation. As a result, the power conversion device used in the trigger method does not disrupt the power state of the electrical grid more than necessary, and power is conserved.

As mentioned above, stand-alone operation is detected by detecting an unusual power state in the electrical grid. Unusual power states in the electrical grid include power failures and momentary dips in voltage (including brief power failures in which the residual voltage falls to 0%; these dips are referred to as "voltage sags" in the present application). For example, when a bolt of lightning strikes near an electrical facility in the electrical grid, it may cause a voltage sag in the electrical grid.

When a power failure occurs, as mentioned above, means are required to disconnect the inverter from the electrical grid which would eliminate stand-alone operation. However, unlike a power failure, when a voltage sag occurs, the inverter does not have to be disconnected in order to recover from an abnormal power state in a very short period of time. Frequent disconnection of the inverter should be avoided from the standpoint of the safety of the electrical grid. Therefore, the inverter should not be disconnected from the electrical grid when a voltage sag occurs.

In the provisions for conventional inverters, the inverter determines whether or not an unusual power state in the electrical grid was caused by a voltage sag, and decides based on the results whether to disconnect. This process takes place over a relatively long period of time (several seconds) after the abnormality has occurred in the electrical grid. As a result, it is relatively easy to disconnect the inverter from the electrical grid when an ordinary power failure occurs and to keep the inverter connected to the electrical grid when a voltage sag occurs.

In Patent Document 1, the electrical charge of the smoothing capacitor installed in the output stage is used to prevent malfunctions such as not detecting brief power failures.

Prior Art Documents

Patent Documents

Patent Document 1: Laid-Open Patent Publication No. 2009-153338

## SUMMARY OF THE INVENTION

Problem to be Solved by the Invention

However, the number of dispersed power sources connected to the electrical grid via a inverter has rapidly increased in recent years, and the operating state of these power conditions has a significant effect on the electrical grid. For example, regardless of whether or not a normal power failure has occurred, when a large number of inverters do not disconnect and continue to operate in stand-alone manner, the result is a huge safety problem.

As a result, the provisions for inverters will be amended to mandate that inverters be rapidly disconnected from the electrical grid (for example, within one second) when stand-alone operation occurs in response to an ordinary power failure. Therefore, there is strong demand for inverters that detect the occurrence of stand-alone operation in a very short period of time, and immediately disconnect from the electrical grid when stand-alone operation is detected.

However, when an abnormality occurs in the power state of the electrical grid, it is difficult to determine whether the abnormality was caused by a voltage sag. For example, when the time allotted for determining whether or not stand-alone operation has occurred (the determination time) is very short, the duration of a voltage sag may be equal to or greater than the determination time, and it may be difficult in this case to differentiate the voltage sag from a normal outage.

As a result, a determination may be made that stand-alone operation has occurred due to a power failure, even though there has only been a voltage sag. This may cause the inverter to be frequently disconnected from the electrical grid. When a large number of inverters is disconnected from the electrical grid all at once due to a voltage sag, the electrical grid may become very unstable.

As a result, there may be a desire to extend the determination time in order to avoid inverter disconnections due to voltage sags. When the determination time is extended across the board regardless of conditions, inverters may be more likely to not quickly disconnect from the electrical grid when stand-alone operation has occurred.

Therefore, if the determination time is to be extended only to cover conditions under which voltage sags are likely to occur, then inverter disconnections due to voltage sags should be avoided as much as possible while also disconnecting as quickly as possible when stand-alone operation occurs. Therefore, operations in which the determination time is extended can be regarded as one response to voltage sags (voltage sag response operation). Other voltage sag response operations should be performed so as to cover conditions under which voltage sags are likely to occur.

In view of the circumstances described above, a inverter is desired which acquires information indicating whether or not a voltage sag is likely to occur, and executes a voltage sag response operation in response to this information. In the case of the technique disclosed in Patent Document 1, it is possible that a voltage sag will not be treated as a power failure, and the determination time for stand-alone operation is easily extended regardless of whether or not a voltage sag is likely to occur. However it is not realistic to combine altering the destination time with a change in the capacity of the smoothing capacitor each time the provisions for inverters are amended.

In light of this problem, a purpose of the present invention is to provide a grid connecting device able to acquire information indicating whether or not a voltage sag is likely to occur, and run a voltage sag response operation in response to this information.

Means of Solving the Problem

The present invention provides a grid connecting device which connects to an electric power system, and outputs power generated by a connected dispersed power source to the electrical grid. In this grid connecting device, it is determined whether the decreasing rate of the sunlight level exceeds a predetermined threshold value, and a predetermined voltage sag response operation is run based on the results of the determination.

As mentioned above, a lightning strike is one cause of voltage sags in an electrical grid. When thunderclouds that cause lightning strikes appear, they block sunlight. This causes the level of sunlight to drop suddenly. When the level of sunlight drops suddenly, there is a possibility that a thundercloud has appeared overhead, and that a lightning strike causing a voltage sag is more likely to occur.

In a grid connecting device with this configuration, information is acquired indicating whether or not a voltage sag is more likely to occur due to thunderclouds, and a voltage sag response operation can be run based on this information. The voltage sag response operation can be any operation performed in response to a voltage sag. This operation is not limited to any particular operation.

Effect of the Invention

As mentioned above, the present invention is a grid connecting device which is able to acquire information indicating the likelihood of a voltage sag due to a lightning strike, and to use this information to perform a voltage sag response operation.

## BRIEF DESCRIPTION OF THE DRAWINGS

FIG. 1 is a diagram used to explain the configuration of a inverter and the connections to a dispersed power source and other components in an embodiment of the present invention.

FIG. 2 is a configuration diagram of the connection control circuit in an embodiment of the present invention.

FIG. 3 is a configuration diagram of the sunlight level acquiring unit in a dedicated PV-type inverter.

FIG. 4 is a configuration diagram of the sunlight level acquiring unit in a general inverter.

FIG. 5 is a flowchart of the connection control operations.

FIG. 6 is a diagram used to explain a specific example of a use for the inverter.

## DETAILED DESCRIPTION OF THE INVENTION

In the following explanation of an embodiment of the present invention, the inverters are used in the residential dwellings of each consumer.

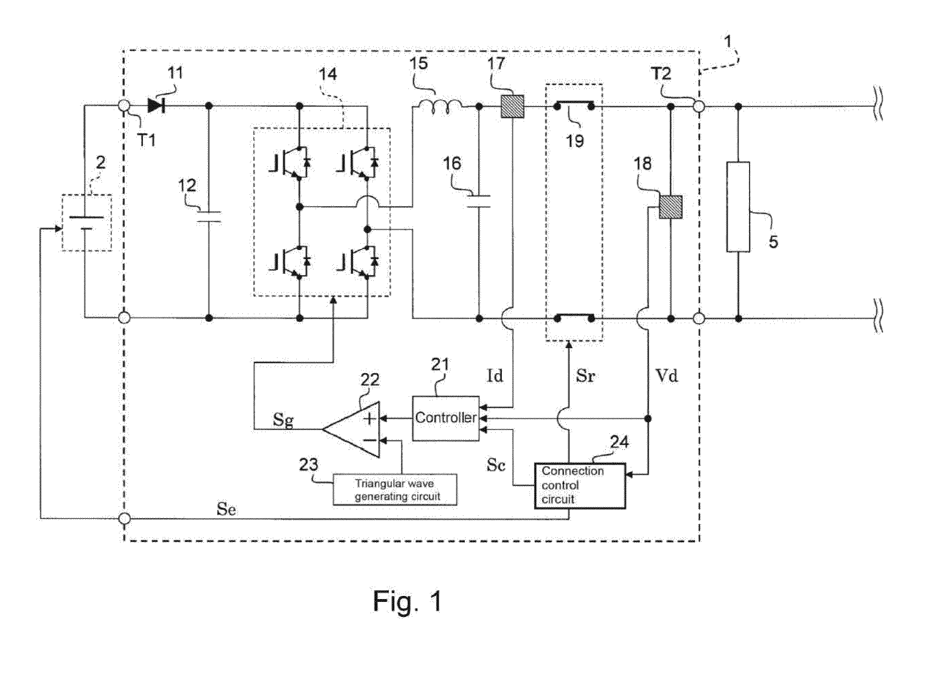

FIG. 1 shows the configuration of the inverter and the connections to a dispersed power source and other components. As shown in this drawing, the inverter 1 has terminals T1 and T2. Terminal T1 is connected to a dispersed power source 2, and terminal T2 is connected to the existing electrical grid. The loads 5 receiving power from the electrical grid (for example, the various electrical devices used by the consumer) are also connected to the electrical grid

The dispersed power source 2 can be a photovoltaic cell (PV), fuel cell (FC), or gas turbine generator. When the dispersed power source 2 is a fuel cell (FC) or gas turbine generator, this dispersed power source 2 stops generating electricity when a stop signal Se is received from the inverter 1.

[Configuration of Inverter]

The following is an explanation of the configuration of the inverter 1. The inverter 1 shown in FIG. 1 has a diode 11, a capacitor 12, an inverter circuit 14, an inductor 15, a capacitor 16, a current detecting circuit 17, a voltage detecting circuit 18, a connection relay 19, a controller 21, a PWM comparator 22, a triangular wave generating circuit 23, and a connection control circuit 24.

The state of the power from the dispersed power source 2 is adjusted by each element (11, 12) and delivered to the inverter circuit 14. The inverter circuit 14 converts the received power to alternating-current power, and supplies the power to the next stage. The inverter circuit 14 operates based on gate signals Sg received from the PWM comparator 22. The waveform of the power sent from the inverter circuit 14 is adjusted by the inductor 15 and the capacitor 16, and the adjusted power is outputted via the connection relay 19 to the delectrical grid.

The connection relay 19 is opened and closed in response to relay switching signals Sr received from the connection control circuit 24. The connection relay 19 is usually closed and the inverter 1 is connected to the electrical grid. However, it is disconnected when the connection relay 19 is opened.

The current detecting circuit 17 continuously detects the value of the current flowing through terminal T2. Information on the current value detected by the current detecting circuit 17 is sent to the controller 21 as current detection signals Id.

The voltage detecting circuit 18 continuously detects the value of the voltage between the poles of terminal T2. Information on the voltage value detected by the voltage detecting circuit 18 is sent to the controller 21 and the connection control circuit 24 as voltage detection signals Vd.

The controller 21 receives the current detection signals Id, the voltage detection signals Vd, and change applying signals Sc (to be described in detail below). The controller 21 synthesizes these signals and outputs the resulting signals to the PWM comparator 22 as signals indicating the inverter level.

In the PWM comparator 22, the output from the controller 21 is inputted to a non-inverting input terminal, and the reference triangular wave signals generated by the triangular wave generating circuit 23 are inputted to the inverting input terminal. The PWM comparator 22 outputs the signals corresponding to the results of the comparison to the inverter circuit 14 as gate signals Sg.

The connection control circuit 24 receives the voltage detection signals Vd, and performs various operations related to opening and closing the connection relay 19 based on this. The following is a more detailed explanation of the configuration of the connection control circuit 24.

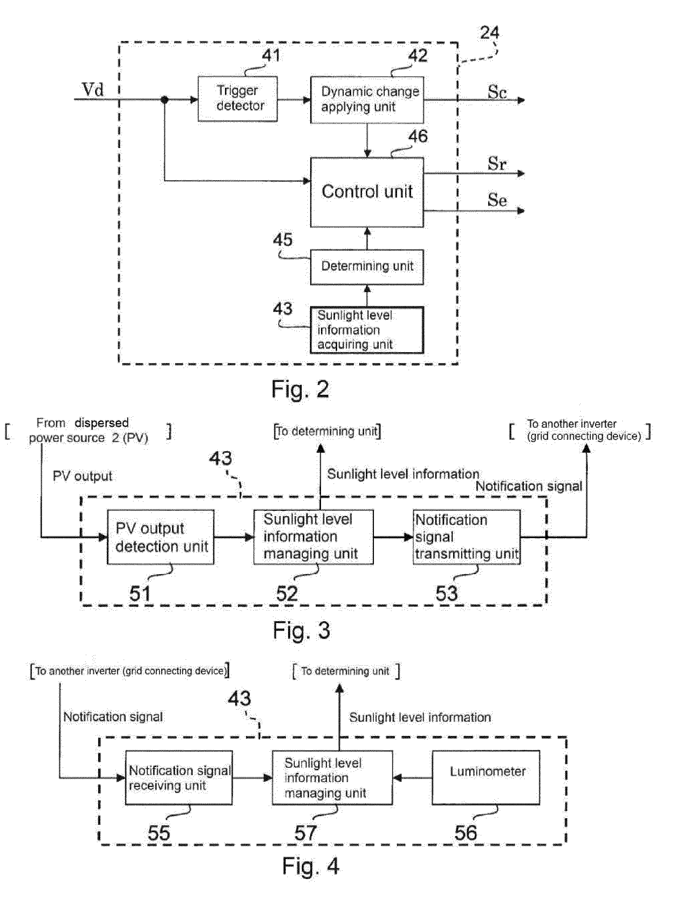

FIG. 2 is a configuration diagram of the connection control circuit 24. As shown in this figure, the connection control circuit 24 includes a trigger detector 41, a dynamic change applying unit 42, a sunlight level information acquiring unit 43, a determining unit 45, and a control unit 46.

The trigger detector 41 continuously monitors electrical fluctuations in the electrical grid, and detects a trigger (starting the detection process for stand-alone operation) based on these electrical fluctuations. The operation of the trigger detector 41 will now be explained in greater detail.

The trigger detector 41 makes signals indicating the power state (especially the state of the voltage waveform) of the electrical grid based on the inputted voltage detection signals Vd. The voltage state item can be the frequency, phase, amplitude, and harmonics amplitude (for example, the third, fifth and seventh harmonics) of the alternating-current voltage in the electrical grid. Signals may be made for one or more of these items.

The trigger detector 41 calculates the amount of change in the power state based on the generated signals. The amount of change is calculated by calculating the difference between a momentary value and the average value of the movement. In this way, the amount of change from the average value of movement is calculated. Other methods can be used to calculate the amount of movement. There are no limitations on the method. For example, instead of the momentary value, the average of momentary values over a recent number of iterations may be used. Instead of the average value of movement, a predetermined reference value (fixed value) can be used.

Next, the trigger detector 41 compares the results of the amount of movement calculation to a predetermined determination threshold value, the determination threshold value is a value which suggests the occurrence of stand-alone operation when the electrical fluctuation in the electrical grid exceeds it. When the calculation result is the larger value in the comparison, the trigger detector 41 uses this as a trigger. The detection result is then sent to the dynamic change applying unit 42.

When the amount of change is calculated for each of a plurality of items, each calculation result is compared to the determination threshold value established for each item. When the calculation result is the greater value in one or more of the items, a trigger is detected.

The dynamic change applying unit 42 switches the change applying signal Sc outputted to the controller 21 from the L level (zero level) to the H level when a trigger is detected by the trigger detector 41. The change applying signal Sc, as described in greater detail below, is a signal used to apply a dynamic change to the power state of the electrical grid. The specific value of the H level is established to apply a sufficiently large dynamic change. The dynamic change applying unit 42 notifies the control unit 46 when an H-level change applying signal Sc has been outputted.

The sunlight level information acquiring unit 43 acquires information indicating the sunlight level near the device (referred to below as "sunlight level information") and transmits this information to the determining unit 45. The sunlight level information acquiring unit 43 periodically acquires this sunlight level information, and sends the updated sunlight level information to the determining unit 45. The sunlight level information acquiring unit 43 will be explained below in greater detail with reference to a specific embodiment.

The determining unit 45 determines whether or not the current situation is a lightning precaution situation based on the latest sunlight level information received from the sunlight level information acquiring unit 43. A lightning precaution situation is a situation in which a voltage sag is more likely to occur due to a lightning strike in the electrical grid connected to the device (the inverter 1). This determination is continually being performed, and the latest results are transmitted to the control unit 46. In this way, the control unit 46 can recognize whether the current situation is a lightning precaution situation. This determination is performed by executing the steps shown below.

When thunderclouds that cause lightning strikes appear and sunlight is blocked by these thunderclouds, the sunlight level drops suddenly. When the level of sunlight drops suddenly, there is a possibility that a thundercloud has appeared overhead, and that a lightning strike causing a voltage sag is more likely to occur.

When the current situation is not a lightning precaution situation, the determining unit 45 calculates the decreasing rate of the sunlight level based on the sunlight level information, and determines whether or not the results of the calculation exceed a predetermined first threshold value. When the results of the calculation exceed the first threshold value, it is determined that there is a lightning precaution situation. When the results of the calculation do not exceed the first threshold value, it is determined that there is not a lightning precaution situation.

The decreasing rate of the sunlight level is calculated using Formula (1).

$$-(S2-S1)/T \ ... \ (1)$$

Here, T is a predetermined fixed time period, and S2 is the sunlight level indicated by the latest sunlight level information. S 1 is the sunlight level indicated by the sunlight level information acquired during the previous fixed time period T. The calculation method is merely an example. Any method that can determine that a rapid decline in the sunlight level has occurred can be used. For example, S1 can be the moving average for the sunlight level between adjacent fixed time periods T.

When sunlight has been blocked by thunderclouds and the thunderclouds have moved away, the sunlight level usually increases rapidly. When the sunlight level increases rapidly, the situation in which a voltage drop caused by a lightning strike is more likely to occur is believed to have dissipated.

When the current situation is a lightning precaution situation and the determining unit 45 calculates based on the sunlight level information that the level of sunlight is increasing, it determines whether or not the results of the calculation exceed a predetermined second threshold value. When the results of the calculation exceed the second threshold value, it is determined that the lightning precaution situation has dissipated. When the results of the calculation do not exceed the second threshold value, it is determined that the lightning precaution situation remains present. The increasing rate of the sunlight level is calculated using Formula (2), which is Formula (1) with the inverted sign.

$$(S2-S1)/T \ ... \ (2)$$

The first threshold value and the second threshold value are determined beforehand using calculations and experiments and stored in the determining unit 45 so that situations in which sunlight is blocked by thunderclouds and situations in which these thunderclouds dissipate can be more accurately determined. The level of sunlight changes gradually over the course of the day based on the height of the sun, and the first threshold value and the second threshold value have to sufficiently reflect this in the rate of decrease and the increasing rate of the sunlight level.

The control unit 46 controls the connection relay 19 and the dispersed power source 2 based on voltage detection signals Vd and information provided by the dynamic change applying unit 42 and the determining unit 45. The control operation will be explained in greater detail below.

[Specific Embodiment of a Sunlight Level Information Acquiring Unit]

As mentioned above, there are many different types of dispersed power sources 2 such as photovoltaic cells (PV), fuel cells (FC), and gas turbine generators. Therefore, two types of inverters 1 have been prepared: a "dedicated PV type" which is used when the dispersed power source 2 is a photovoltaic cell, and a "general type" which is used when the dispersed power source 2 is one of the other types of power source.

The form of the sunlight level information acquiring unit 43 depends on the type of inverter. Each form of sunlight level information acquiring unit 43 will be explained below.

First, the sunlight level information acquiring unit 43 for a dedicated PV-type inverter 1 will be explained with reference to FIG. 3. As shown in the drawing, the sunlight level information acquiring unit 43 includes a PV output detection unit 51, a sunlight level information managing unit 52, and a notification signal transmitting unit 53.

The PV output detection unit 51 continuously detects the level of power (PV output) to the inverter 1 from the photovoltaic cell dispersed power source 2, and sends the detected results to the sunlight level information managing unit 52.

Periodically, the sunlight level information managing unit 52 generates updated sunlight level information based on the information received from the PV output detection unit 51. The amount of power generated by the photovoltaic cell depends on the amount of sunlight, and the amount of PV output is determined based on the amount of power generated by the photovoltaic cell at this time. Therefore, the amount of power generated by the photovoltaic at a given time is determined based on the detection results of the PV output detection unit 51, and this indicates the level of sunlight.

Send flag information is stored in the sunlight level information acquiring unit 43. The send flag is freely set to "ON" or "OFF" by the user or operator.

When the send flag is "ON", the sunlight level information generated by the sunlight level information managing unit 52 is successively sent to the determining unit 45 and the notification signal transmitting unit 53. When the send flag is "OFF" the sunlight level information is not sent to the notification signal transmitting unit 53.

When the send flag is "ON", the notification signal transmitting unit 53 generates notification signals including the sunlight level information received from the sunlight level information managing unit 52. These notification signals are used to notify other devices (another general type inverter 1) of the sunlight level information. The notification signal transmitting unit 53 sends the generated notification signals to other devices via wireless or wired transmission. When the send flag is "OFF", the operation used to generate notification signals is not performed.

Therefore, the sunlight level information acquiring unit 43 in a dedicated PV-type inverter 1 can acquire sunlight level information indicating the level of sunlight at various times of the day based on the amount of power generated by the photovoltaic cell. Also, the sunlight level information acquiring unit 43 can generate notification signals including sunlight level information and transmit the signals to one or more other devices.

The information included in the notification signals can be information in any format that can reflect the results of detecting the amount of power generated by the photovoltaic cell. For example, information (a flag) indicating whether or not a lightning precaution situation has been determined based on the detection results can be included in the notification signals.

The sunlight level information acquiring unit 43 may determine whether or not the current time is within the sunlight period (the period of time in which sunlight can be used by the photovoltaic cell to generate electric power), and acquire sunlight level information based on the amount of power generated by the photovoltaic cell when the current time is within the sunlight period (hours of daylight) in which power can be generated by the photovoltaic cell. In this way, the operation for acquiring sunlight level information is not performed unnecessarily.

The operation for determining whether or not the current time is within the sunlight period can be performed by storing sunlight period data for an entire year (data indicating that the sunlight period extends from a given time in the morning to a given time in the evening on a given date over the course of one year), and providing a means for acquiring the current date and time (an internal clock function or a radio clock receiving function).

Next, the sunlight level information acquiring unit 43 for a general inverter 1 will be explained with reference to FIG. 4. As shown in the drawing, the sunlight level information acquiring unit 43 includes a notification signal receiving unit 55, a luminometer 56, and a sunlight level information managing unit 57. Receive flag information is stored in the sunlight level information acquiring unit 43. The receive flag is freely set to "ON" or "OFF" by the user or operator.

When the receive flag is "ON", the notification signal receiving unit 55 receives notification signals from another device (a dedicated PV-type inverter 1) to obtain sunlight level information, and this information is sent to the sunlight level information managing unit 57. When the receive flag is "OFF", notification signals are not received.

When the receive flag is "OFF", the luminometer 56 continuously measures the luminosity at a given location, and sends the measurement results to the sunlight level information managing unit 57. The luminometer 56 is placed at a location exposed to sunlight, and the measurement results from the luminometer 56 correspond to the amount of sunlight at the time. Therefore, the amount of sunlight at the time is determined based on the measurement results from the luminometer 56. When the receive flag is "ON", the measurements are omitted.

When the receive flag is "ON", the sunlight level information managing unit 57 acquires sunlight level information by receiving the sunlight level information from the notification signal receiving unit 55. When the receive flag is "OFF", the sunlight level information managing unit 57 periodically generates updated sunlight level information based on information received from the luminometer 56. The sunlight level information received or generated by the sunlight level information managing unit 57 is sent to the determining unit 45.

In this way, the sunlight level information acquiring unit 43 in the general inverter 1 can acquire sunlight level information indicating the level of sunlight at various times of the day based on the measurement results of the luminometer 56. The sunlight level information can also be obtained by receiving notification signals. When notification signals are received, a luminometer 56 does not have to be installed in a location exposed to sunlight, and the correct sunlight level information can be acquired even when the inverter 1 is installed indoors.

The send flag and receive flag described above can be set based on whether or not it is desirable to send and/or receive notification signals in a given situation. For example, when both a dedicated PV-type inverter 1 and a general inverter 1 are used by the same consumer, it may be desirable to send and receive notification signals.

When it is desirable to send and receive notification signals, the send flag and receive flag are turned "ON" in both inverters 1. The communication route used to send and receive notification signals is constructed to suit the situation. In this way, notification signals can be sent and received. When it is unnecessary or impermissible to send and receive notification signals, the send flag and receive flag is turned "OFF" in both inverters 1. Here, the operations performed to send and receive notification signals are eliminated, and the operation burned on the inverters 1 can be reduced.

[Operation of the Inverter]

The following is an explanation of the main operations performed by the inverter 1. The basic operations of the inverter 1 are to continuously adjust the power from the dispersed power source 2 and output the adjusted power to the electrical grid.

The power state detected here has to comply with predetermined connection provisions. In other words, the distortion factor and power factor of the outputted harmonic voltage has to fall within a prescribed range, and the waveform of the outputted current has to be a sinusoidal wave. In order not to disrupt the power state of the electrical grid, the state of the outputted power has to substantially match the state of the power in the electrical grid (that is, in terms of the alternating-current frequency, phase, voltage amplitude, etc.).

The controller 21, the PWM comparator 22 and the triangular wave generating circuit 23 work together to generate gate signals Sg based on the current detection signals Id and the voltage detection signals Vd which satisfy these conditions while taking into account the fall in voltage due to the current and the voltage state of the electrical grid.

The inverter 1 controls the inverter circuit 14 using the pulse width modulation (PWM) method to properly adjust the power sent from the dispersed power source 2. During normal operations, the change applying signals Sc are at the L level (zero level). This has no effect on the power adjustment.

[Connection Control Operations]

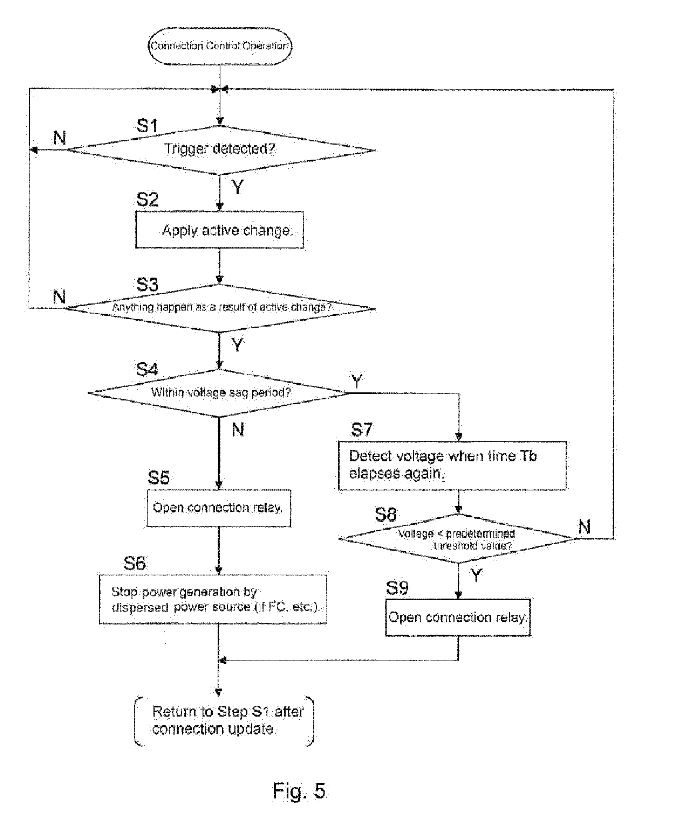

When stand-alone operation occurs, the dispersed power source 2 has to be disconnected from the electrical grid. The inverter 1 executes the basic operations described above in parallel to determine whether or not stand-alone operation has occurred and, if necessary, to disconnect from the electrical gridelectrical grid (connection control operation). The following is an explanation of the connection control operation with reference to the flowchart shown in FIG. 5.

As mentioned above, the trigger detector 41 continuously monitors for the occurrence of a trigger based on electrical fluctuations in the electrical grid (Step S1). When the trigger detector 41 has detected a trigger (Step S1: Y), the dynamic change applying unit 42 outputs H-level change applying signals Sc to the controller 21. The controller 21 synthesizes the H-level change applying signals Sc, the current detection signals Id and the voltage detection signals Vd, and makes it into signals indicating the inverter level.

Therefore, the power outputted to the electrical grid from the inverter 1 goes from matching the power state of the electrical grid to exceeding the stage by an amount corresponding to the dynamic fluctuation. As a result, a dynamic fluctuation is applied to the power state of the electrical grid (Step S2). The time period in which the change applying signal Sc is maintained at the H level, that is, the time period in which the dynamic fluctuation is applied, is established so as to equal or exceed time period Ta described below.

At this time, the control unit 46 monitors the power state of the electrical grid based on the voltage detection signals Vd. When a predetermined amount of time Ta (for example, 0.3 seconds) has elapsed since the start of the dynamic change application, it is determined whether or not the power state has been affected by the dynamic change (Step S3). Because the determination technique is in accordance with the technique for detecting stand-alone operation using the active detection method of the prior art, further explanation has been omitted.

When the power state has not been affected by the dynamic fluctuation (Step S3: N), the control unit 46 determines that stand-alone operation has not occurred. At this time, the operation in Step S 1 is repeated.

When the power state has been affected by the dynamic fluctuation (Step S3: Y), the control unit 46 performs the different operations to determine whether or not current conditions indicate a lightning precaution situation (that is, whether or not a voltage sag due to lightning is more likely) (Step S4). In other words, when the current conditions do not indicate a lightning precaution situation (Step S4: N), the control unit 46 determines that stand-alone operation has occurred, and outputs a relay switching signal Sr to open the connection relay 19 (Step S5). When the type of dispersed power source 2 connected to the device is a fuel cell (FC) or gas turbine generator, the control unit 46 (excluding a dedicated PV type unit) outputs a stop signal Se to stop the generation of power by the dispersed power source 2 (Step S6).

When the current time is within the voltage sag response period (Step S4: Y), the control unit 46 does not immediately determine whether stand-alone operation has occurred. Instead, it detects the voltage of the electrical grid after a predetermined period of time Tb (for example, 0.2 seconds) has elapsed (Step S7). The control unit 46 then determines whether or not the detected voltage has fallen below a predetermined threshold value (the threshold value for determining whether or not stand-alone operation has occurred) (Step S8).

As a result, when the detected voltage has not fallen below the predetermined threshold value (Step S8: N), the determination result in Step S3 is determined to have been caused by a voltage sag (that is, stand-alone operation did not occur because of a normal outage). In this case, the connection relay 19 is not opened, and the operation in Step S1 is repeated.

However, when the detected voltage is lower than the predetermined threshold value (Step S8: Y), that is, when the voltage of the electrical grid continues to be abnormal after period of time Tb has elapsed, it is determined that stand-alone operation has occurred because of a normal power failure. The control unit 46 then outputs a relay switching signal Sr to open the connection relay 19 (Step S9).

However, even when such a determination has been made, the determination results in Step S3 may be caused by a voltage sag (especially when the duration is greater than the sum of Ta and Tb). Because of the lightning precaution situation, the possibility of such a voltage sag occurring is relatively high. A fuel cell (FC) or gas turbine generator is likely to deteriorate when suddenly stopped and restarted, and a relatively long time is required from startup to the beginning of output. The control unit 46 must not execute the operation in Step S6 (output a stop signal Se to stop the generation of power by the dispersed power source 2).

In other words, the inverter 1 disconnects from the electrical grid and stops the output of power to the electrical grid, but continues to generate power with the dispersed power source 2. At this time, the electric power generated by the dispersed power source 2 is directed to a separate heater, etc. prepared beforehand. After the operation in Step S6 or Step S9 has been performed, for example, after it has been confirmed that stand-alone operation has been cancelled, the connection is restored and the operation in Step S 1 is repeated.

As mentioned above, a portion of the series of connection control operations is to perform a predetermined voltage sag response operation when it has been determined that the current time is within the voltage sag response period. More specifically, when certain conditions have been satisfied such as the power state of the electrical grid being affected by a dynamic change (Step S3: Y), the connection relay is not opened (the electrical grid is not disconnected) and this operation is performed as a voltage sag response operation.

When a voltage sag has occurred with a duration equal to or greater than period Ta, if it is outside of the voltage sag response period, it is determined without exception that a stand-alone operation has occurred, and the connection relay 19 is opened (Step S5). If it is within the voltage sag response period, the connection relay 19 is not opened. This avoids a situation in which the inverter 1 is frequently disconnected due to voltage sags. As a result, a large number of inverters 1 are kept from being disconnected all at once in a power transmission system.

When the voltage of the electrical grid has been detected after period Tb has elapsed since the conditions were satisfied and the voltage is lower than the predetermined threshold value, the connection relay is opened (the electrical grid is disconnected) as a voltage sag response operation. In this way, the inverter 1 can be disconnected from the electrical grid and stand-alone operation cancelled when a normal power failure occurs even within the voltage sag response period.

From the standpoint of the time required to determine whether stand-alone operation has occurred, the determination time is time Ta, and the determination time for the lightning precaution situation is the sum of times Ta and Tb. Thus, outside of the voltage sag response period (that is, during normal operation), rapid detection of a stand-alone operating state is emphasized. In a lightning precaution situation (that is, during a period in which a voltage sag is likely to occur), accurate differentiation between a normal power failure and a voltage sag is emphasized.

When a (non-dedicated PV-type) inverter 1 is disconnected from the electrical grid and the type of dispersed power source 2 connected to the device is a fuel cell (FC) or gas turbine generator, the power generating operations of the dispersed power source 2 are stopped (stop process) (Step S6). In one type of voltage sag response operation, the inverter 1 keeps the power generating operations from being stopped during a lightning precaution situation.

Thus, the fuel cell (FC) or gas turbine generator does not have to be started when voltage sags are frequent (especially when the duration is longer than the sum of times Ta and Tb), and the normal connected state can be quickly restored (immediately recover when power is restored). In this way, deterioration of fuel cells (FC) and gas turbine generators due to sudden stopping can be minimized.

In the present embodiment, the stand-alone operation is detected using the trigger method described above when the current conditions do not indicate a lightning precaution situation. However, the present invention is not limited to the present embodiment. A different method can also be used such as the passive detection method and active detection method described above.

[Specific Embodiment of a Inverter Application]

A inverter 1 described above is used to connect a dispersed power source 2 to the electrical grid (bank) in each consumer residence. When the dispersed power source 2 in each consumer residence is a fuel cell or a gas turbine generator (that is, not a photovoltaic cell), a general inverter 1 is used. When the dispersed power source 2 to be connected is a photovoltaic cell, a dedicated PV-type or general inverter 1 is used.

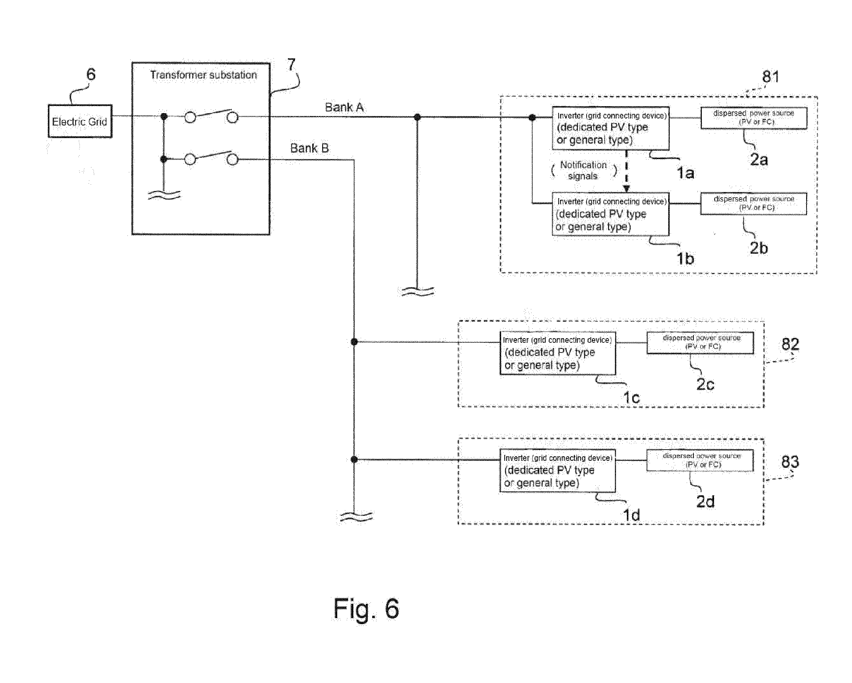

This specific embodiment of the inverter 1 will now be explained with reference to FIG. 6 (showing inverters 1 connected to a power transmission system). In the power transmission system shown in the drawing, power from a electric grid 6 is transmitted to a transformer substation 7, and dispersed at the transformer substation 7 to a plurality of banks (lines to each consumer residence and representing the electrical grid when viewed from the perspective of the consumer). Here, power is transmitted to consumer 81 via bank A and to consumer 82 and consumer 83 via bank B.

Because consumer 81 uses both a photovoltaic cell dispersed power source 2 (2a) and a fuel cell dispersed power source 2 (2b), a dedicated PV-type inverter 1 (1a) is used to connect dispersed power source 2a to the electrical grid, and general inverter 1 (1b) is used to connect dispersed power source 2b to the electrical grid.

The send flag is turned "ON" in inverter 1a, and the receive flag 1b is turned "ON" in inverter 1b. A communication path for notification signals is installed between the inverters (1a, 1b). Inverter 1a acquires sunlight level information based on the amount of power generated by the dispersed power source 2a (photovoltaic cell), and sends notification signals to inverter 1b. Inverter 1b acquires sunlight level information from the received notification signals.

In this way, both inverters (1a, 1b) can acquire sunlight level information, and can determine whether there is a lightning precaution situation based on this information. Because inverter 1b does not require the instillation of a luminometer 56 in a location exposed to sunlight, it can be installed indoors. When these inverters (1a, 1b) are viewed as a single unit, a grid connection system can be realized which is installed to send and receive notification information. In this example, a single inverter 1b receives notification signals from inverters 1a (the transmitting device). However, a plurality of general inverters may also receive notification signals from the inverter 1a.

Because a fuel cell dispersed power source 2 (2c) is used by consumer 82, the dispersed power source 2c is connected to the electrical grid using a general inverter 1 (1c). The receive flag is turned "OFF" in the inverter 1c. The inverter 1c can receive sunlight level information based on the measurement results of a luminometer 56, and can determine whether or not there is a lightning precaution situation based on this information.

Because a photovoltaic cell dispersed power source 2 (2d) is used by consumer 83, the dispersed power source 2d is connected to the electrical grid using a dedicated PV-type inverter 1 (1d). The send flag is turned "OFF" in the inverter 1d. The inverter 1c can receive sunlight level information based on the amount of power generated by the dispersed power source 2d (photovoltaic cell), and can determine whether or not there is a lightning precaution situation based on this information.

Even though the consumer 83 uses a photovoltaic cell dispersed power source 2 (2d), a general inverter 1 can be used instead of a dedicated PV-type inverter 1. As in the case of consumer 82, the receive flag may be turned "OFF".

[Other]

As explained above, the inverter 1 in the present embodiment is connected to the electrical grid and outputs power generated by a connected dispersed power source 2 to the electrical grid. The inverter determines whether or not the decreasing rate of the sunlight level exceeds a predetermined threshold value to determine whether or not there is a lightning precaution situation (a situation in which a voltage sag caused by a lightning strike is more likely to occur in the electrical grid), and performs a predetermined voltage sag response operation when there is a lightning precaution situation. A lightning precaution situation may also refer to a situation in which there is a danger of a voltage sag caused by a lightning strike.

A dedicated PV-type inverter 1 is connected to a photovoltaic cell serving as a dispersed power source 2, and a state detection unit recognizes a decreasing rate of the sunlight level based on the amount of power generated by the photovoltaic cell. As a result, a separate means is not required to acquire sunlight level information (such as a luminometer), and the resulting device is more compact and less expensive.

When the send flag of the dedicated PV-type inverter 1 is turned "ON", notification signals reflecting the results of detecting the amount of power generated by the photovoltaic cell are generated, and these notification signals are sent to another device (a general inverter 1). When another device uses the detection result information acquired by this device, overall efficiency is improved. A notification signal sending function can be omitted from a dedicated PV-type inverter 1.

When the receive flag of a general inverter 1 is turned "ON", notification signals can be received from another device (a dedicated PV-type inverter 1), and it can be determined whether or not the rate of decrease in the level of sunlight exceeds a predetermined threshold value based on the received information. A general inverter 1 is also equipped with a luminometer 56. When the receive flag is turned "OFF", the rate of decrease in the level of sunlight is determined based on the luminosity measurement results from the luminometer 56 (the measurement results).

The general inverter 1 in the present embodiment can determine whether or not the decreasing rate of the sunlight level has exceeded a predetermined threshold value based on information received in notification signals, and can determine the rate of decrease in the level of sunlight based on luminosity measurement results from a luminometer. However, one or the other of these two determining means can be omitted.

In addition to the dedicated PV-type inverter 1, a general inverter 1 equipped with a luminometer 56 can also include a means of generating and sending notification signals. Here, the general inverter 1 generates notification signals reflecting the luminosity measurement results of the luminometer 56 and sends the notification signals to another device. When another device uses the detection result information acquired by this device, overall efficiency is improved.

As mentioned above, a inverter 1 in the present embodiment acquires sunlight level information on its own or from notification signals received from another inverter 1 in order to determine whether there is a lightning precaution situation. When the inverter 1 detects the information on its own, separate equipment is not required to supply this information to the inverter, and the user does not have to provide the information to the inverter 1.

The types of dispersed power sources in the explanation of the present embodiment were photovoltaic (PV) cells, fuel cells (FC), and gas turbine generators. However, the dispersed power sources are not limited to these examples. The dispersed power source can be anything able to output power, such as a secondary battery. The power conversion device was a inverter, but the present invention is not limited to this example. For example, when the dispersed power source outputs alternating-current power such as a gas turbine generator, a power conversion device such as a cyclo-converter or a matrix converter can be used to convert the alternating-current power directly to the desired alternating-current power.

The inverter 1 in the present embodiment was used in a household, but inverters can be used by medium-scale consumers such as stores, apartment buildings, government buildings, and schools. Because inverters 1 are applied to the power supply system at schools in addition to photovoltaic cells, etc., they may contribute to the New Deal School Initiative.

Because of their characteristics, fuel cells (FC) are difficult to start and stop suddenly. When the dispersed power source 2 is a fuel cell (FC), the inverter 1 can perform (1) or (2) below as the voltage sag response operation.

(1) Continue operations without opening the connection relay 19 (without disconnecting from the electrical grid).
(2) Promptly opening the connection relay 19 (prompt disconnection from the electrical grid), and routing the power generated by the fuel cell (FC) to a heater with a water storage tank.

In this way, sudden stop and start of fuel cells (FC) can be prevented.

In the inverter 1 of the present embodiment, the amount of power generated by a photovoltaic cell or the measurements of a luminometer are used as information correlated with the level of sunlight ("the sunlight level parameter"). However, the present invention is not restricted to the present embodiment in this way. For example, the sunlight level parameter can be values detecting the level of infrared light (radiant heat), the level of ultraviolet light, or the level of electromagnetic waves included in the sunlight.

Other sunlight level parameters include the reception level of broadcast signals BS (which fall when the signal transmission is obstructed, for example, by cloud cover), or the detected air pressure (which usually falls when clouds increase). Additional sunlight level parameters include the detected value or amount of change in the output characteristics of the photovoltaic cell, such as the maximum power point (Pmax), the open voltage, and the short-circuit current.

Current time information (correlated with the height of the sun in the sky) may be referenced when determining the decreasing rate of the sunlight level based on the sunlight parameter. In this way, the change in the sunlight level due to a change in the height of the sun in the sky can be subtracted to more accurately identify the change in the sunlight level due to cloud cover.

When a plurality of sunlight level parameters can be acquired, the inverter 1 may use these sunlight parameters in one of determination methods (A) through (C) below to determine the lightning precaution situation.

(A) If any one of the sunlight level parameters satisfies the predetermined conditions (the OR determination method), a lightning precaution situation is determined.
(B) When all of the sunlight level parameters satisfy the predetermined conditions (the AND determination method), a lightning precaution situation is determined.
(C) When more than half the sunlight level parameters satisfy the predetermined conditions (the multiple-factor determination method), a lightning precaution situation is determined.

The present invention was explained above with reference to an embodiment, but the present invention is not limited to the embodiment. Various modifications may be added to the embodiment without departing from the spirit of the present invention.

Industrial Applicability

The present invention can be used in a inverter connected to the electrical grid.

Key to the Drawings

1, 1a-1d: Inverter (grid connecting device)
2, 2a-2d: Dispersed power source
5: Load
6: Electric grid
7: Transformer substation
11: Diode
12: Capacitor
14: Inverter circuit
15: Inductor
16: Capacitor
17: Current detecting circuit
18: Voltage detecting circuit
19: Connection relay
21: Controller
22: PWM Comparator
23: Triangular wave generating circuit
24: Connection control circuit
41: Trigger detector
42: Dynamic change applying unit
43: Sunlight level information acquiring unit
45: Determining unit
46: Control unit

51: PV output detection unit
52: Sunlight level information managing unit
53: Notification signal transmitting unit
55: Notification signal receiving unit
56: Luminometer
57: Sunlight level information managing unit
81-83: Consumers

**Claims**

1. A grid connecting device connecting to an electric grid, and outputting power generated by a connected dispersed power source to the electrical grid,
the grid connecting device determining whether a decreasing rate of sunlight level exceeds a predetermined threshold value, and running a predetermined voltage sag response operation based on the results of the determination.

2. The grid connecting device of claim 1, wherein the grid connecting device is connected to a photovoltaic cell as the dispersed power source, and recognizes the sunlight level based on the amount of power generated by the photovoltaic cell.

3. The grid connecting device of claim 2, wherein a notification signal reflecting the detection results for the amount of power generated by the photovoltaic cell is made, and the notification signal is transmitted to another device.

4. The grid connecting device of claim 1, wherein signals from the grid connecting device are received by another device, and the decreasing rate of the sunlight level is determined to exceed the threshold value based on the received information.

5. The grid connecting device of claim 1 further comprising a luminometer, the decreasing rate of the sunlight level being recognized via the luminosity results detected by the luminometer.

6. The grid connecting device of claim 5, wherein the notification signal reflecting the luminosity results detected by the luminometer is generated, and the notification signal is transmitted to another device.

7. The grid connecting device of claim 1 further comprising a connection control unit for detecting the power state of the electrical grid and disconnecting from the electrical grid when the detected result satisfies predetermined conditions,
the connection control unit, as a voltage sag response operation, does not disconnect from the electrical grid when the detected result satisfies predetermined conditions, but disconnects from the electrical grid when the voltage detected after a predetermined term of time has elapsed since the electrical state satisfied the conditions is lower than a predetermined threshold state.

8. A grid connecting system comprising:

a transmitting device, the transmitting device being the grid connecting device of claim 3; and a plurality of grid connecting devices, each grid connecting device receiving notification signals transmitted by the transmitting device, and the grid connecting devices being the grid connecting device of claim 4.

Fig. 1

Vd ──● ──→ **Trigger detector** (41) ──→ **Dynamic change applying unit** (42) ──→ Sc

24

**Control unit** (46) ──→ Sr, Se

**Determining unit** (45)

**Sunlight level information acquiring unit** (43)

Fig. 2

[From dispersed power source 2 (PV)]    [To determining unit]    [To another inverter (grid connecting device)]

PV output    43    Sunlight level information    Notification signal

**PV output detection unit** (51) ──→ **Sunlight level information managing unit** (52) ──→ **Notification signal transmitting unit** (53)

Fig. 3

[To another inverter (grid connecting device)]    [To determining unit]

Notification signal    43    Sunlight level information

**Notification signal receiving unit** (55) ──→ **Sunlight level information managing unit** (57) ←── **Luminometer** (56)

Fig. 4

Connection Control Operation

S1 Trigger detected? — N / Y

S2 Apply active change.

S3 Anything happen as a result of active change? — N / Y

S4 Within voltage sag period? — Y / N

S5 Open connection relay.

S6 Stop power generation by dispersed power source (if FC, etc.).

S7 Detect voltage when time Tb elapses again.

S8 Voltage < predetermined threshold value? — N / Y

S9 Open connection relay.

Return to Step S1 after connection update.

Fig. 5

Fig. 6

## INTERNATIONAL SEARCH REPORT

| International application No. |
| --- |
| PCT/JP2011/071993 |

A. CLASSIFICATION OF SUBJECT MATTER
*H02J3/38*(2006.01)i

According to International Patent Classification (IPC) or to both national classification and IPC

B. FIELDS SEARCHED

Minimum documentation searched (classification system followed by classification symbols)
H02J3/38

Documentation searched other than minimum documentation to the extent that such documents are included in the fields searched
Jitsuyo Shinan Koho           1922-1996   Jitsuyo Shinan Toroku Koho    1996-2011
Kokai Jitsuyo Shinan Koho     1971-2011   Toroku Jitsuyo Shinan Koho    1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2003-90887 A  (FFC Ltd.),<br>28 March 2003 (28.03.2003),<br>claim 1; paragraphs [0021] to [0061]<br>(Family: none) | 1-8 |
| A | JP 2001-169565 A  (Aichi Electric Co., Ltd.),<br>22 June 2001 (22.06.2001),<br>paragraphs [0036], [0037]; fig. 1<br>(Family: none) | 1-8 |
| A | JP 2000-350369 A  (Nissin Electric Co., Ltd.),<br>15 December 2000 (15.12.2000),<br>paragraph [0014]<br>(Family: none) | 1-8 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>14 December, 2011 (14.12.11) | Date of mailing of the international search report<br>27 December, 2011 (27.12.11) |
| --- | --- |
| Name and mailing address of the ISA/<br>Japanese Patent Office | Authorized officer |
| Facsimile No. | Telephone No. |

Form PCT/ISA/210 (second sheet) (July 2009)

17

**EP 2 624 404 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009153338 A